# EUROPÄISCHE PATENTSCHRIFT

(11) **EP 0 676 533 B1**
(45) Veröffentlichungstag und Bekanntmachung des Hinweises auf die Patenterteilung: **24.09.1997**
(21) Anmeldenummer: 95104426.2
(22) Anmeldetag: 25.03.1995
(51) Int. Cl.: F01L 1/26, F01L 1/44, F01L 3/06, F02B 31/06

(54) **Einlasskanalsystem für eine Brennkraftmaschine**
Inlet passage system for an internal combustion engine
Système de cannaux d'admission pour un moteur à combustion interne

(30) Priorität: 09.04.1994 DE 4412281
(43) Veröffentlichungstag der Anmeldung: 11.10.1995
(73) Patentinhaber: ADAM OPEL AG, 65423 Rüsselsheim (DE)
(72) Erfinder: Grebe, Uwe Dieter, Dipl. Ing., D-65468 Trebur (DE)
(74) Vertreter: Bergerin, Ralf, Dipl.-Ing.

(56) Entgegenhaltungen:
- EP-A- 0 390 589
- EP-A- 0 444 018
- EP-A- 0 629 772
- DE-A- 3 148 457
- DE-A- 3 444 356

## Beschreibung

Die Erfindung bezieht sich auf ein Einlaßkanalsystem für eine Brennkraftmaschine mit den im Patentanspruch 1 der EP-A-629 772 (Stand der Technik gemäß Art. 54(3) EPÜ) angegebenen Merkmalen. Hier sind ein Haupt- und ein Nebeneinlaßkanal zu einer etwa zylindrischen Brennkammer vorgesehen. Beide Einlaßkanäle werden durch Einlaßventile gesteuert geöffnet und verschlossen. Der den Nebeneinlaßkanal passierende Gasstrom ist durch einen Drehschieber drosselbar, insbesondere freigeb- bzw. verschließbar. Der Drehschieber ist etwa koaxial zu dem Einlaßventil des Nebeneinlaßkanales angeordnet. Durch ein radiales Fenster kann Gas in sein Inneres eintreten. Eine innere Wandung leitet das Gas um, und es strömt durch eine axiale Öffnung in Richtung des Einlaßventils. Die einer Brennkammer der o. g. Brennkraftmaschine zuzuführende Gasmenge und ihre Verteilung läßt sich steuern, indem der Nebeneinlaßkanal entweder geöffnet oder geschlossen wird. Somit bilden sich auch in Abhängigkeit von der Drehschieberstellung Wirbel in der Brennkammer aus, was wiederum unter anderem Einfluß auf Geräuschemissionen und das Klopfverhalten der Brennkraftmaschine hat. Die Steuerung hat hier in Abhängigkeit von Betriebskennwerten der Brennkraftmaschine und/oder des angetriebenen Aggregates zu erfolgen.

Ausgehend von der EP-A-629 772 liegt der Erfindung die Aufgabe zugrunde, ein Einlaßkanalsystem zu schaffen, das es gestattet, die Wirbelbildung im Zylinderraum (Brennkammer) bedarfsgerecht zu steuern, wobei aber immer ein zündfähiges Gemisch im Bereich einer Zündkerze bereitgestellt und eine Minimierung von Abgas- und Geräuschemissionen sowie eine Optimierung des Klopfverhaltens erreicht werden soll.

Zur Lösung dieser Aufgabe zeichnet sich das Einlaßkanalsystem durch die im kennzeichnenden Teil des Patentanspruchs 1 angegebenen Merkmale aus. Die weitere Ausgestaltung der Erfindung ergibt sich aus den Patentansprüchen 2 bis 11.

Das Einlaßkanalsystem ist grundlegend so gestaltet, wie dies in der EP-A-629 772 beschrieben ist. Einem Brennraum (Zylinder) wird Gas über zumindest zwei Einlaßventile zugeführt. Zu jedem Einlaßventil führen Einlaßkanäle, wobei ein Haupteinlaßkanal und mindestens ein Nebeneinlaßkanal vorgesehen sind. Etwa koaxial zum Einlaßventil des Nebeneinlaßkanales ist ein Drehschieber angeordnet. Er ist um seine Drehschieberachse gesteuert verdrehbar, wodurch der den Nebeneinlaßkanal passierende Gasvolumenstrom drosselbar ist. Das Gas tritt durch ein radiales Fenster in das Innere des Drehschiebers ein, wird dort umgeleitet und strömt durch eine axiale Öffnung in Richtung des Einlaßventiles. Die Strömungsrichtung des Gases wird entscheidend von der Ausbildung der inneren Wandung des Drehschiebers und von seiner Stellung im Nebeneinlaßkanal bestimmt. Diese Stellung des Drehschiebers ist stufenlos einstellbar zwischen einer Position in der das radiale Fenster von Wandungen eines Zylinderkopfes ganz verschlossen ist und einer Position, in der der maximal mögliche Querschnitt des Nebeneinlaßkanales frei ist. Durch Verdrehung des Drehschiebers wird also der Gasstrom im Nebeneinlaßkanal einerseits gedrosselt und andererseits umgelenkt. Die Ausrichtung erfolgt derart, daß das Gas durch das Einlaßventil in Richtung einer Zündkerze abgegeben (etwa radial) oder in Richtung einer Zylinderwandung geleitet wird (etwa tangential). Auch jebeliebige Zwischenstellung ist einstellbar.

Das den Haupteinlaßkanal durchströmende Gas wird in konstanter Richtung in die Brennkammer geleitet. Die Gasbewegung kann entweder vorrangig zur Zylinderwandung ausgerichtet, aber auch in anderer Ausführung fest auf die Zündkerze gerichtet sein. Die in die Brennkammer gelangenden Gasströme beeinflussen einander. Die Art ihrer Verwirbelung ist ausschlaggebend für den Verlauf der Verbrennung sowie auch für Abgas- und Schallemissionen und das Klopfverhalten. Die beiden Gasströme können etwa symmetrisch zueinander in den Zylinderraum gelangen, wobei im Ergebnis eine relativ geringe drallförmige Verwirbelung vorliegt, da Bewegungskomponenten entgegengesetzt zueinander ausgerichtet sind. Bei unsymmetrischer Einströmung werden die Gase in der Brennkammer stark verwirbelt. Da die Einströmrichtung des den Nebeneinlaßkanal passierenden Gases nunmehr exakt einstellbar ist, kann eine variable Steuerung der Verwirbelung stattfinden.

Innerhalb der Erfindung ist zusätzlich die Art der Kraftstoffeinspritzung von Bedeutung. Im Bereich einer Zündkerze, die im allgemeinen in der Zylindermitte angeordnet ist, soll immer ein gut zündfähiges Kraftstoff-Luft-Gemisch vorliegen. Dies ist auch bei der beschriebenen variablen Verwirbelung zu gewährleisten. Das zur Zündkerze gelangende Gas hat in jedem Falle mit Kraftstoff versorgt zu werden. Dieses Gemisch kann fetter sein, als das Gemisch im Bereich der Zylinderwandung. Dort kann unter Umständen sogar reine Luft einströmen.

Eine Weiterbildung der Erfindung sieht vor, daß durch den Drehschieber auch eine Abgasrückführung steuerbar ist. Ein Abgasrückführkanal kann im Nebeneinlaßkanal im Bereich des Drehschiebers enden. Ein Auslaß des Abgasrückführkanales wird dann, je nach Drehschieberstellung, durch ein radiales Fenster freigegeben. Dies wird wiederum in Abhängigkeit von Betriebskennwerten gesteuert. Somit ergeben sich weitere Möglichkeiten der Optimierung der Verbrennung im Zylinderraum. Insgesamt ist mit der Erfindung das Zusammenspiel der Faktoren:
- Drosselung des Gasstromes im Nebeneinlaßkanal,
- Abgaberichtung dieses Gasstromes,
- Kraftstoffverteilung im Zylinderraum sowie
- ggf. rückgeführte Abgasmenge
zu steuern.

Damit sind sowohl die Motorleistung als auch sein Betriebsverhalten sowie seine Umweltverträglichkeit mit relativ geringem Aufwand optimierbar.

Die detaillierte Beschreibung der Erfindung erfolgt anhand von Ausführungsbeispielen. In den zugehörigen Zeichnungen zeigt:
- Fig. 1: einen Schnitt durch einen Zylinderkopf einer Brennkraftmaschine entlang der Mittellinie eines Einlaßventils eines Nebenansaugkanals;
- Fig. 2: eine schematisch dargestellte Draufsicht auf eine Brennkammer mit Einlaßkanalsystem, in einer Drehschieberstellung zur Gasumleitung Richtung Zündkerze;
- Fig. 3: eine schematisch dargestellte Draufsicht auf die Brennkammer nach Figur 1 in einer schieberstellung für hohe Gasdurchsätze der Brennkraftmaschine;
- Fig. 4: eine schematisch dargestellte Draufsicht auf die Brennkammer nach Figur 2 in einer Drehschieberstellung schieberstellung zur Gasumleitung Richtung Zylinderwandung;
- Fig. 5: eine schematisch dargestellte Draufsicht auf eine Brennkammer mit einem Einlaßkanalsystem anderer Ausführung in einer Drehschieberstellung für hohe Gasdurchsätze der Brennkraftmaschine;
- Fig. 6: eine schematisch dargestellte Draufsicht auf das Einlaßkanalsystem nach Figur 5 in einer Drehschieberstellung zur Gasumleitung Richtung Zylinderwandung.

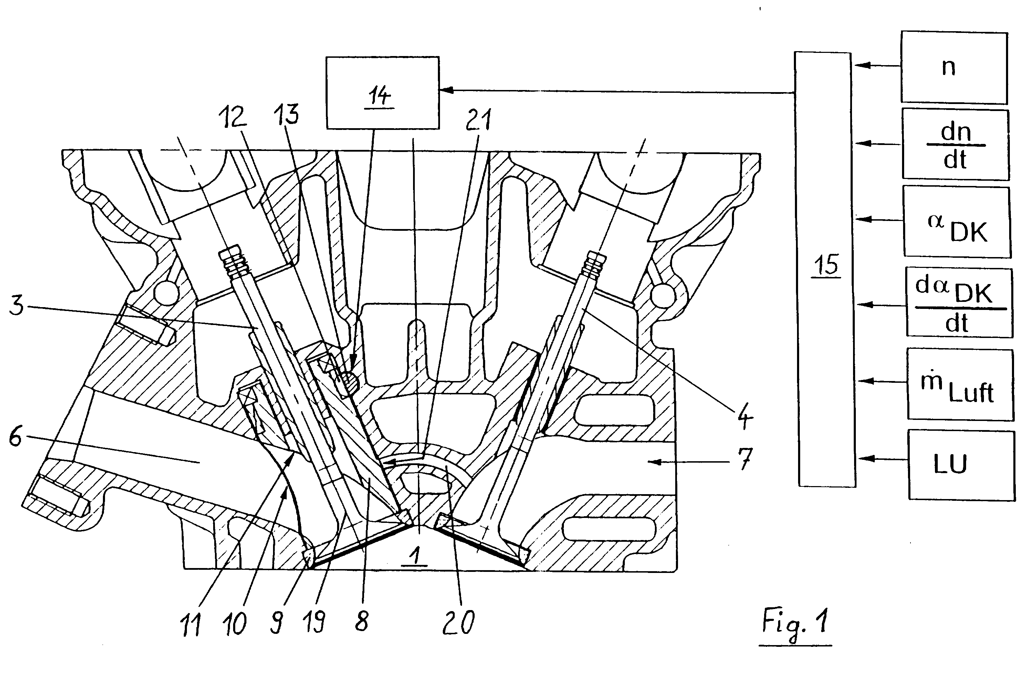

In einem Zylinderkopf einer Brennkraftmaschine sind für jeden Brennraum 1 mindestens zwei Einlaßventile 2, 3 und mindestens ein Auslaßventil 4 vorgesehen. Eines der Einlaßventile 2 steuert einen HauptansaugKanai 5, wobei dies in Figur 1 nicht verdeutlicht ist. Ein anderes Einlaßventil 3 steuert einen Nebeneinlaßkanal 6. Das Auslaßventil 4 steuert einen Auslaßkanal 7. Die Ventile 2, 3, 4 werden von im Zylinderkopf gelagerten Nockenwellen über nicht dargestellte Tassenstößel betätigt, die in den Stößelführungen des Zylinderkopfes verschiebbar gelagert sind. Unterhalb des Brennraumes 1 ist ein Zylinder angeordnet, in dem in an sich bekannter Weise ein Hubkolben dichtend gleitet und so einen Arbeitsraum bildet. Beim Füllen des Arbeitsraumes mit Frischgas sind das Einlaßventil 2 des Hauptansaugkanals 5 (nicht in Figur 1 dargestellt) und das Einlaßventil 3 des Nebenansaugkanals 6 geöffnet. Um das Einlaßventil 3 des Nebeneinlaßkanals 6 herum ist ein walzenförmiger Drehschieber 8 angeordnet, der an der einen Stirnseite mit einem Lager im Zylinderkopf drehbar gelagert ist. Das Lager stützt sich an einem Kragen des Zylinderkopfes ab, welcher sich um die Ventilführung erstreckt. Die andere Stirnseite des Drehschiebers 8 ist unmittelbar benachbart einem Ventilsitzring 9, an welchem der Teller des Einlaßventils 3 im geschlossenen Zustand aufliegt. Der Drehschieber 8 hat an seinem Umfang ein Fenster 10, welches in einer Offenstellung des Drehschiebers 8 in seiner Kontur dem Querschnitt des Nebeneinlaßkanals 6 angeglichen ist, aber auch größer als dieser sein kann. Diesem Fenster 10 schließt sich im Inneren des Drehschiebers 8 ein Kanalabschnitt an, welcher dem Strömungsverlauf des Nebeneinlaßkanals 6 folgt und der mit seiner Wandung 11 den Gasstrom des Frischgases führt. Im Bereich des oberen Lagers ist bei der Ausführung nach Figur 1 am Umfang des Drehschiebers 8 eine Verzahnung 12 eingebracht, in welcher eine im Zylinderkopf verschiebbar gelagerte Zahnstange 13 eingreift. Die Zahnstange 13 hat einen runden Querschnitt und ist in einer entsprechenden Bohrung des Zylinderkopfes geführt, welche sich über die Länge des Zylinderkopfes erstreckt, so daß bei mehreren Zylindern die Drehschieber 8 aller Zylinder von einer Zahnstange 13 beaufschlagt sind. An einem Ende der Zahnstange 13 greift ein nicht gezeigter Stellmotor an, welcher die Zahnstange 13 in ihrer Lagerung im Zylinderkopf zu verschieben vermag. Der Stellmotor ist vorzugsweise als Elektromotor mit einem daran befindlichen Schraub- oder Schneckentrieb ausgeführt. Er kann aber auch als elektrischer Linear-Motor oder als druckbeaufschlagte Druckdose ausgeführt sein. Der Stellmotor ist Teil einer Stellvorrichtung 14. Diese wird angesteuert von einer Steuervorrichtung 15, welcher als Eingangsgrößen Daten der Brennkraftmaschine, wie die Drehzahl n und ihre Änderung dn/dt, der Drosselklappenwinkel α_{DK} und seine Änderung dα_{DK}/dt, der Luftdurchsatz ṁ_{Luft}, die Laufunruhe LU oder auch die Temperatur zugeführt werden. Findet die Brennkraftmaschine als Antriebsmotor eines Kraftfahrzeuges Anwendung, können auch fahrzeugspezifische Daten, wie beispielsweise die Geschwindigkeit oder die vorgewählte Getriebeübersetzung, als Eingangsgrößen Verwendung finden. Aus den sensorisch ermittelten Eingangsdaten für die Steuervorrichtung 15 wird ein Wert ermittelt, welcher analog der erforderlichen Stellung des Drehschiebers 8 ist. Dieser Wert wird vom Stellmotor in eine Längsverschiebung der Zahnstange 13 umgesetzt, wodurch der Drehschieber 8 in seine Sollposition überführt wird. Der Steuervorrichtung 15 kommen aber noch weitere Aufgaben zu, worauf weiter unten eingegangen wird.

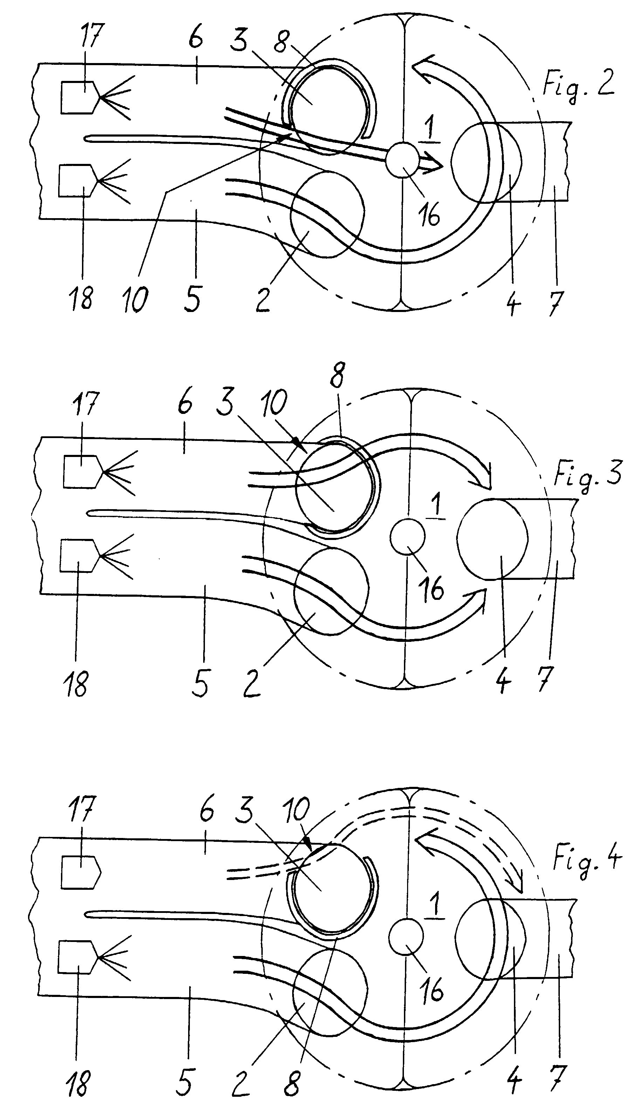

Die Bedeutung der einzelnen Stellungen des Drehschiebers 8 im Nebeneinlaßkanal 6 ist abhängig von der festgelegten Ausbildung des Haupteinlaßkanales 5. Dieser kann, wie eingangs beschrieben, entweder etwa tangential auf die zylindrische Umfangswandung der Brennkammer 1 ausgerichtet sein. Andererseits ist es auch möglich, den Haupteinlaßkanal 5 so zu gestalten, daß ein ihn passierender Gasstrom etwa radial in die Brennkammer 1 einströmt und eine mittige angeordnete Zündkerze 16 trifft. Im erstgenannten Fall (Anlegen des Hauptgasstromes an die Zylinderwandung) wird eine starke Wirbelbildung im Brennraum erreicht, wenn der Gasstrom des Nebeneinlaßkanales 6 gedrosselt auf die Zündkerze gerichtet ist, wie dies Figur 2 schematisch zeigt. Kraftstoff wird dabei annähernd gleichmäßig von Einspritzdüsen 17, 18 in beide Einlaßkanäle 5, 6 abgegeben. Da der Gasstrom im Nebeneinlaßkanal 6 gedrosselt ist, enthält er dann das fettere Kraftstoff-Luft-Gemisch, das im Bereich der Zündkerze sehr zündwillig ist. Das den Haupteinlaßkanal 5 passierende Gas kann deutlich magerer in die Brennkammer 1 gelangen. Aus der in Figur 2 gezeigten Position kann der Drehschieber 8 stufenlos beispielsweise in die in Figur 3 gezeigte Stellung überführt werden. Der Gasstrom im Nebeneinlaßkanal 6 kann den Drehschieber 8 nahezu ungedrosselt passieren und wird wiederum genauso wie der Gasstrom des Haupteinlaßkanales 5 mit Kraftstoff versorgt. Im Brennraum 1 besteht eine annähernd gleichmäßige Verteilung des Kraftstoff-Luft-Gemisches. Drallförmige Verwirbelungen, die im wesentlichen spiralförmig um die Zylinderachse ausgerichtet sind, treten nur deutlich geringer auf, als in Figur 2 gezeigt.

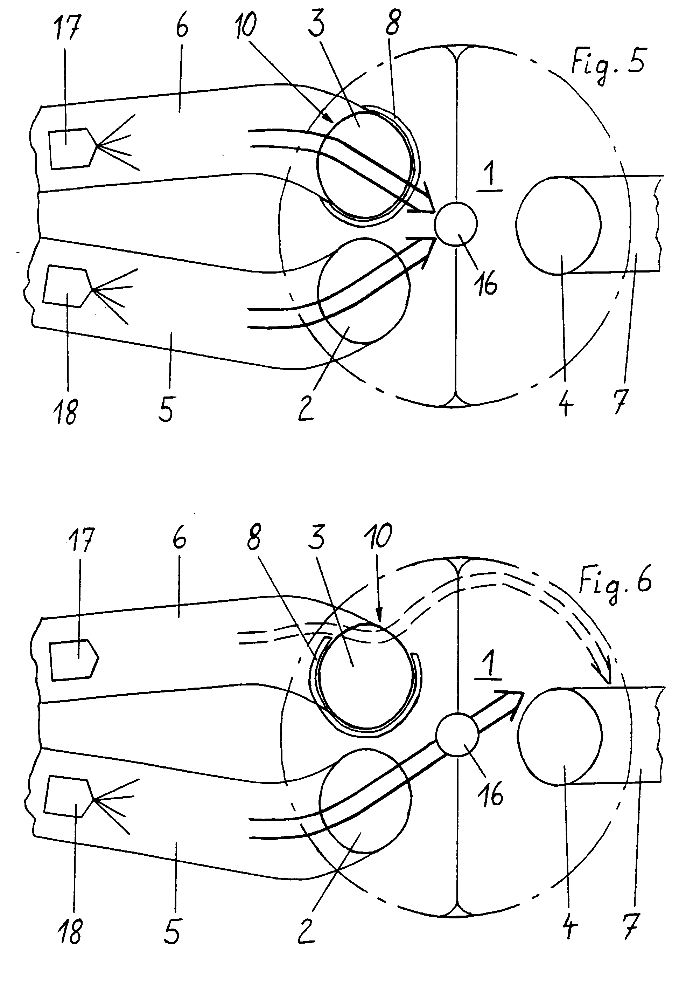

Die Drehschieberstellung nach Figur 3 ist besonders für hohe Gasdurchsätze geeignet. Bei weiterem Verdrehen des Drehschiebers 8 um seine Achse 19 kann er in die in Figur 4 gezeigte Position gelangen. Der Gasstrom im Nebeneinlaßkanal 6 wird gedrosselt und durch den Drehschieber 8 in Richtung Zylinderwandung abgegeben. Die beiden in den Brennraum 1 gelangenden Gasströme können so ausgerichtet sein, daß der Gasstrom des Haupteinlaßkanals 5 geringfügig mehr radial ausgerichet ist, als der des Nebeneinlaßkanales 6. Der gedrosselte Nebenstrom bewegt sich dann entlang der Zylinderwandung zwischen dieser und dem Hauptstrom. In diesem Fall wird kein Kraftstoff in den Nebeneinlaßkanal 6 eingespritzt. Durch den Haupteinlaßkanal 5 wird ein relativ fettes Gemisch bereitgestellt, daß dann im Bereich der Zündkerze 16 verwirbelt.

Im zweiten Fall (Ausrichtung des Hauptgasstromes in Richtung Zündkerze 16) ist wiederum die Variation der schieberstellung in Zusammenhang mit der Kraftstoffeinspritzung von Bedeutung. Der Hauptgasstrom wird grundsätzlich mit Kraftstoff versorgt, so daß im Bereich der Zündkerze 16 ein zündwilliges Gemisch vorhanden ist. Der Nebengasstrom wird entweder annähernd ungedrosselt ebenfalls in Richtung Zündkerze 16 geleitet, wobei er auch mit Kraftstoff versorgt wird (Figur 5). Andererseits kann der Gasstrom im Nebeneinlaßkanal 6 durch Verdrehen des Drehschiebers 8 in die in Figur 6 gezeigte Stellung gedrosselt und in Richtung Zylinderwandung abgegeben werden. Es kann dann reine Luft angesaugt werden, wobei in der Brennkammer 1 starke Verwirbelungen stattfinden.

Der Drehschieber 8 kann in die gezeigten Positionen, aber auch in Zwischenstellungen überführt werden. Über die Stellvorrichtung 14 wird jeweils die den aktuellen Betriebsbedingungen entsprechende optimale Position eingestellt. Gleichzeitig wird von der Steuervorrichtung 15 vorgegeben, in welcher Weise Kraftstoff einzuspritzen ist. In den Bereich der Zündkerze 16 sollte immer ein relativ fettes Gemisch zugeführt werden. Dementsprechend werden die Einspritzdüsen 17, 18 angesteuert, wobei eine Einspritzdüse 17 auch inaktiviert werden kann.

Als Ersatz für die Einspritzdüsen 17, 18 kann auch nur eine Einspritzdüse mit Zweistrahlcharakteristik zur Anwendung kommen. Auch so ist eine gesteuerte Kraftstoffverteilung in den Haupteinlaßkanal 5 und den Nebeneinlaßkanal 6 möglich. Die Anordnung der Einspritzdüsen ist dabei frei innerhalb des Einlaßkanalsystems wählbar. Sie können direkt in die einzelnen Einlaßkanäle 5, 6 einspritzen oder in einem Fenster der Trennwand zwischen beiden Kanälen 5, 6 angeordnet sein.

In einer weiterhin vorteilhaften Ausgestaltung der Erfindung ist im Zylinderkopf nach Figur 1 ein Abgasrückführkanal 20 vorgesehen, der den Auslaßkanal 7 mit dem einlaßkanal 6 verbindet. Ein Auslaß 21 des Abgasrückführkanals 20 ist im Bereich des Walzendrehschiebers 8 vorgesehen. Er wird durch das Fenster 10 (oder auch durch ein gesondert vorzusehendes radiales Fenster) des Drehschiebers 8 freigegeben, oder durch die Umfangswandung des Drehschiebers 8 verschlossen. Ein zurückgeführter Abgasstrom ist also durch den Walzendrehschieber 8 drosselbar. Ist der Drehschieber 8 in einer Position, in der das Fenster 10 zumindest teilweise über dem Auslaß 21 liegt, kann Abgas in das Innere des Drehschiebers 8 und dann durch das Einlaßventil 3 in die Brennkammer 1 strömen. Damit ist eine weitere Einflußmöglichkeit auf das Betriebsverhalten der Brennkraftmaschine gegeben. Bei alisierter Abgasrückführung ist der Drehschieber 8 zugsweise aus temperaturbeständigem Metall- oder Keramikwerkstoff zu fertigen.

Durch die Erfindung wird realisiert, daß eine genaue stufenlose Einstellung des einen Nebeneinlaßkanal 6 passierenden Gasstromes erfolgen kann, was den Volumendurchsatz als auch die Strömungsrichtung betrifft. Dies erfolgt durch eine Steuervorrichtung 15 einer Stellvorrichtung 14. Gleichzeitig wird durch die Steuervorrichtung die Art und Weise der Kraftstoffzumessung an die beiden Einlaßkanäle 5, 6 festgelegt. Dies erfolgt in Abhängigkeit von den aktuell vorliegenden bzw. parallel einzustellenden mungsverhältnissen. Dadurch kann eine den jeweils vorliegenden Betriebsbedingungen entsprechende optimale Verwirbelung und Gemischverteilung im Brennraum 1 gewährleistet werden. Zusätzlich wird über den Drehschieber 8 auch gesteuert, ob und in welcher Menge Abgas anteilig dem Frischgas beigemischt wird. Insgesamt ergibt sich unter Zuhilfenahme baulich einfacher Mittel eine Vielzahl von Steuerungsmöglichkeiten zur Leistungssteigerung, zur Minimierung der Abgas- und Geräuschemissionen sowie zur Optimierung des Klopfverhaltens.

## Patentansprüche

1. Einlaßkanalsystem für eine Brennkraftmaschine mit den folgenden Bestandteilen und Eigenschaften:
- jedem Zylinder der Brennkraftmaschine sind zwei oder mehr in einem Zylinderkopf angeordnete Einlaßventile (2, 3) zugeordnet,
- jedem Einlaßventil (2, 3) ist ein Einlaßkanal (5, 6) zugeordnet, wobei je Zylinder ein Haupteinlaßkanal (5) und zumindest ein Nebeneinlaßkanal (6) vorgesehen sind,
- zumindest ein Nebeneinlaßkanal (6) je Zylinder ist mit einer regelbaren Drosseleinrichtung versehen, die als rohrförmiger Drehschieber (8) ausgebildet ist,
- der Drehschieber (8) ist koaxial zu dem Einlaßventil (3) des jeweiligen Nebeneinlaßkanals (6) drehbar gelagert, schließt sich mit einem radialen Fenster (10) an den Nebeneinlaßkanal (6) an und ist mit einer axialen Öffnung nahe eines Ventilsitzes (9) des Einlaßventils (3) angeordnet,
- der Drehschieber (8) weist eine zwischen seinem radialen Fenster (10) und seiner axialen Öffnung verlaufende, dem Strömungsverlauf des ihn durchströmenden Gases angepaßte Wandung (11) auf,
- eine Stellvorrichtung (14 ) ist vorgesehen, die den Drehschieber (8) in Abhängigkeit von Betriebskennwerten (n, dn/dt, α_{DK}, dα_{DK}/dt, ṁ_{Luft}, LU) der Brennkraftmaschine und/oder des angetriebenen Aggregates in mehr als eine Wirbelbildungen im Zylinderraum (1) gezielt beeinflussende Position überführt, wobei der Gasstrom, der das dem Haupteinlaßkanal (5) zugeordnete Einlaßventil (2) passiert, unveränderlich vorrangig im Bereich der Zylinderwandung verwirbelt oder im wesentlichen auf eine Zündkerze (16) gerichtet ist und der den Nebeneinlaßkanal (6), den Drehschieber (8) und das Einlaßventil (3) passierende Gasstrom variabel auf die Zylinderwandung, die Zündkerze (16) oder auf dazwischenliegende Ziele ausrichtbar ist
- eine Einspritzvorrichtung zum Zumessen von Kraftstoff an den den Haupteinlaßkanal (5) und an den den Nebeneinlaßkanal (6) mit Drehschieber (8) passierenden Gasstrom ist vorgesehen, wobei zumindest einem Gasstrom Kraftstoff zugemessen wird.

2. Einlaßkanalsystem nach Anspruch 1, **dadurch gekennzeichnet,** daß die Ausrichtung des drosselbaren, den Nebeneinlaßkanal (6) passierenden Gasstromes mittels der Stellvorrichtung (14) durch Verdrehung des Drehschiebers (8) um eine Drehschieberachse (19) variierbar ist.

3. Einlaßkanalsystem nach Anspuch 1 oder 2, **dadurch gekennzeichnet**, daß der eine Gasstrom, der den Haupteinlaßkanal (5) und das Einlaßventil (2) passiert, vorzugsweise fest auf die Zylinderwandung ausgerichtet ist und der zweite Gasstrom, der den in einer bestimmten Stellung befindlichen Drehschieber (8) und das Einlaßventil (3) passiert, diesem erstgenannten Gasstrom etwa entgegengerichtet ist.

4. Einlaßkanalsystem nach Anspruch 1, **dadurch gekennzeichnet,** daß zumindest einer der Gasströme, der den Haupteinlaßkanal (5) oder den Nebeneinlaßkanal (6) mit Drehschieber (8) passiert, auf die Zündkerze (16) ausgerichtet ist und zumindest diesem Gasstrom Kraftstoff zugemessen wird.

5. Einlaßkanalsystem nach den Ansprüchen 1 bis 4, **dadurch gekennzeichnet,** daß die Zündkerze (16) etwa in der Zylindermitte angeordnet ist.

6. Einlaßkanalsystem nach den Ansprüchen 1 bis 5, **dadurch gekennzeichnet,** daß dem Gasstrom im Haupteinlaßkanal (5) und dem Gasstrom im Nebeneinlaßkanal (6) etwa gleich viel Kraftstoff zugemessen, oder nur dem Gasstrom im Haupteinlaßkanal (5) Kraftstoff zugeführt wird.

7. Einlaßkanalsystem nach Anspruch 6, **dadurch gekennzeichnet,** daß dem Gasstrom im Nebeneinlaßkanal (6) nur dann kein Kraftstoff zugeführt wird, wenn sich dieser Gasstrom durch eine entsprechende Stellung des Drehschiebers (8) an die Zylinderwandung anlegt.

8. Einlaßkanalsystem nach den Ansprüchen 1 bis 7, **dadurch gekennzeichnet,** daß durch eine Steuervorrichtung (15) sowohl die einzustellende Position des Drehschiebers (8) als auch die einzuspritzende Kraftstoffmenge und deren Verteilung bestimmt wird.

9. Einlaßkanalsystem nach den Ansprüchen 1 bis 8, **dadurch gekennzeichnet**, daß für jeden Einlaßkanal (5, 6) getrennte Einspritzdüsen (17, 18) vorgesehen sind.

10. Einlaßkanalsystem nach den Ansprüchen 1 bis 8, **dadurch gekennzeichnet,** daß den Gasströmen in beiden Einlaßkanälen (5, 6) Kraftstoff durch eine Einspritzdüse mit Zweistrahlcharakteristik zugemessen wird.

11. Einlaßkanalsystem nach den Ansprüchen 1 bis 10, **dadurch gekennzeichnet**, daß durch Verdrehung des Drehschiebers (8) um seine Drehschieberachse (19) auch eine über einen Abgasrückführkanal (20) dem Nebeneinlaßkanal (6) zuzuführende Abgasmenge steuerbar ist.

## Claims

1. Inlet port system for an internal combustion engine with the following components and properties:
- each cylinder of the engine is assigned two or more inlet valves (2, 3) arranged in a cylinder head,
- each inlet valve (2, 3) is assigned an inlet port (5, 6), one main inlet port (5) and at least one auxiliary inlet port (6) being provided to every cylinder,
- at least one auxiliary inlet port (6) to every cylinder is provided with a controllable throttle device which is constructed as a tubular rotary slide valve (8),
- the rotary slide valve (8) is mounted rotatably coaxially with the inlet valve (3) of the respective auxiliary inlet port (6), is connected by a radial aperture (10) to the auxiliary inlet port (6) and is arranged with an axial opening near a valve seat (9) of the inlet valve (3),
- the rotary slide valve (8) comprises a wall (11) extending between its radial aperture (10) and its axial opening and adapted to the flow path of the gas flowing through it,
- an adjusting device (14) is provided which moves the rotary slide valve (8) as a function of operating parameters (n, dn/dt, α_{TV}, dα_{TV}/dt, mₐᵢᵣ, running noise) of the engine and/or of the driven unit to more than one position selectively influencing vortices in the cylinder chamber (1), wherein the gas stream which passes through the inlet valve (2) assigned to the main inlet port (5) is swirled invariably as a priority in the region of the cylinder wall or essentially directed onto a sparking plug (16) and the gas stream passing through the auxiliary inlet port (6), the rotary slide valve (8) and the inlet valve (3) can be directed variably onto the cylinder wall, the sparking plug (16) or onto targets located therebetween,
- an injection device for apportioning fuel to the gas stream passing through the main inlet port (5) and to the gas stream passing through the auxiliary inlet port (6) with rotary slide valve (8) is provided, fuel being apportioned to at least one gas stream.

2. Inlet port system according to claim 1, characterised in that the orientation of the throttlable gas stream passing through the auxiliary inlet port (6) is variable by means of the adjusting device (14) by rotation of the rotary slide valve (8) about a rotary slide valve axis (19).

3. Inlet port system according to claim 1 or 2, characterised in that one gas stream which passes through the main inlet port (5) and the inlet valve (2) is preferably permanently directed onto the cylinder wall and the second gas stream which passes through the rotary slide valve (8) which is in a certain position and the inlet valve (3) is more or less in the opposite direction to this first-mentioned gas stream.

4. Inlet port system according to claim 1, characterised in that at least one of the gas streams which passes through the main inlet port (5) or the auxiliary inlet port (6) with rotary slide valve (8) is directed onto the sparking plug (16) and fuel is apportioned to at least this gas stream.

5. Inlet port system according to claims 1 to 4, characterised in that the sparking plug (16) is arranged more or less at the centre of the cylinder.

6. Inlet port system according to claims 1 to 5, characterised in that approximately the same amount of fuel is apportioned to the gas stream in the main inlet port (5) and to the gas stream in the auxiliary inlet port (6), or fuel is supplied only to the gas stream in the main inlet port (5).

7. Inlet port system according to claim 6, characterised in that no fuel is supplied to the gas stream in the auxiliary inlet port (6) only when this gas stream is applied to the cylinder wall by a corresponding position of the rotary slide valve (8).

8. Inlet port system according to claims 1 to 7, characterised in that both the position of the rotary slide valve (8) to be set and the amount of fuel to be injected and its distribution are determined by a control device (15).

9. Inlet port system according to claims 1 to 8, characterised in that separate injection nozzles (17, 18) are provided for each inlet port (5, 6).

10. Inlet port system according to claims 1 to 8, characterised in that fuel is apportioned to the gas streams in both inlet ports (5, 6) by an injection nozzle with twin-jet characteristic.

11. Inlet port system according to claims 1 to 10, characterised in that by rotation of the rotary slide valve (8) about its rotary slide valve axis (19) a quantity of exhaust gas to be supplied to the auxiliary inlet port (6) via an exhaust return port (20) can also be controlled.

## Revendications

1. Système de canaux d'admission pour un moteur à combustion interne comportant les éléments suivants et présentant les caractéristiques suivantes:
- à chaque cylindre du moteur à combustion interne sont associées deux soupapes d'admission (2, 3), ou plus, disposées dans une culasse,
- à chaque soupape d'admission (2, 3) est associé un canal d'admission (5, 6), un canal d'admission principal (5) et au moins un canal d'admission secondaire (6) étant prévus dans chaque cylindre,
- au moins un canal d'admission secondaire (6) par cylindre est pourvu d'un dispositif d'étranglement réglable qui est agencé sous la forme d'un distributeur rotatif (8) tubulaire,
- le distributeur rotatif (8) est monté tournant, coaxial avec la soupape d'admission (3) du canal d'admission secondaire (6) concerné, se raccorde par une fenêtre (10) radiale au canal d'admission secondaire (6) et est disposé avec une ouverture axiale à proximité d'un siège (9) de soupape de la soupape d'admission (3),
- le distributeur rotatif (8) comporte une paroi (11) adaptée à la courbe d'écoulement du gaz qui le traverse qui s'étend entre sa fenêtre (10) radiale et son ouverture radiale,
caractérisé par :
- un dispositif de réglage (14) qui, en fonction de caractéristiques de fonctionnement (n, dn/dt, α_{DK}, dα_{DK}/dt, m_{Air}, LU) du moteur à combustion interne et/ou des machines attelées, amène le distributeur rotatif (8) dans une position qui agit de manière ciblée sur plus d'une turbulence dans le cylindre (1), le flux de gaz qui transite par la soupape d'admission (2) associée au canal d'admission principal (5) étant, de manière non modifiable, de préférence mis en rotation dans la région de la paroi de cylindre ou essentiellement dirigé sur une bougie d'allumage (16) et le flux de gaz qui transite par le canal d'admission secondaire (6), le distributeur rotatif (8) et la soupape d'admission (3) pouvant être dirigé de manière modifiable sur la paroi de cylindre, sur la bougie d'allumage (16) ou vers des points situés entre deux,
- un dispositif d'injection pour distribuer une quantité dosée de combustible dans le flux de gaz qui transite par le canal d'admission principal (5) et par le canal d'admission secondaire (6) pourvu du distributeur rotatif (8), du combustible étant distribué à au moins un flux de gaz.

2. Système de canal d'admission selon la revendication 1, caractérisé par le fait que l'orientation du flux de gaz étranglable transitant par le canal d'admission secondaire (6) peut être modifiée à l'aide du dispositif de réglage (14), par rotation du distributeur rotatif (19) autour d'un axe (19) de distributeur rotatif.

3. Système de canal d'admission selon la revendication 1 ou 2, caractérisé par le fait que l'un des flux de gaz qui transite par le canal d'admission principal (5) et la soupape d'admission (2), de préférence, est dirigé de manière fixe sur la paroi du cylindre et que le second flux de gaz qui transite par le distributeur rotatif (8) placé dans une position déterminée et par la soupape d'admission (3) est dirigé dans la direction opposée au premier flux de gaz.

4. Système de canal d'admission selon la revendication 1, caractérisé par le fait qu'au moins l'un des flux de gaz qui transitent par le canal d'admission principal (5) ou par le canal d'admission secondaire (6) est dirigé sur la bougie d'allumage (16) et que du combustible est distribué dans au moins ce flux de gaz.

5. Système de canal d'admission selon les revendications 1 à 4, caractérisé par le fait que la bougie d'allumage (16) est disposée sensiblement au centre de cylindre.

6. Système de canal d'admission selon les revendications 1 à 5, caractérisé par le fait que l'on distribue sensiblement la même quantité de combustible dans le flux de gaz dans le canal d'admission principal (5) et dans le flux de gaz dans le canal d'admission secondaire (6) ou que l'on distribue du combustible seulement dans le flux de gaz dans le canal d'admission principal (5).

7. Système de canal d'admission selon la revendication 6, caractérisé par le fait que l'on ne distribue du combustible dans le flux de gaz dans le canal d'admission secondaire (6) que lorsque ledit flux de gaz, par une position correspondante du distributeur rotatif (8), est dirigé contre la paroi de cylindre.

8. Système de canal d'admission selon les revendications 1 à 7, caractérisé par le fait que l'on détermine, à l'aide d'un dispositif de commande (15), aussi bien la position à régler du distributeur rotatif (8) que la quantité de combustible à injecter et sa répartition.

9. Système de canal d'admission selon les revendications 1 à 8, caractérisé par le fait que des injecteurs (17, 18) séparés sont prévus par chaque canal d'admission (5, 6).

10. Système de canal d'admission selon les revendications 1 à 8, caractérisé par le fait que l'on distribue du combustible au flux de gaz dans les deux canaux d'admission (5, 6) à l'aide d'un injecteur à deux jets.

11. Système de canal d'admission selon les revendications 1 à 10, caractérisé par le fait que par rotation du distributeur rotatif (8) autour de son axe (19) on peut également contrôler une quantité de gaz d'échappement à ramener dans le canal d'admission secondaire (6), par le biais d'un canal (20) de recirculation.
